# EUROPEAN PATENT APPLICATION

(11) **EP 4 827 089 A1**
(43) Date of publication of application: **21.10.2026**
(21) Application number: 24916493.0
(22) Date of filing: 14.10.2024
(51) Int. Cl.: H04N 19/17, H04N 19/85

(54) **FILM GRAIN REGION PROCESSING METHOD, DEVICE, AND STORAGE MEDIUM**

(30) Priority: 09.01.2024 CN 202410035423
(71) Applicant: ZTE Corporation, Shenzhen, Guangdong 518057 (CN)
(72) Inventor: GAO, Ying, Shenzhen, Guangdong 518057 (CN); XIE, Shaowei, Shenzhen, Guangdong 518057 (CN); WU, Ping, Shenzhen, Guangdong 518057 (CN); BAI, Yaxian, Shenzhen, Guangdong 518057 (CN); HUANG, Cheng, Shenzhen, Guangdong 518057 (CN); JIA, Menghu, Shenzhen, Guangdong 518057 (CN); NIU, Weihong, Shenzhen, Guangdong 518057 (CN)
(74) Representative: Savi, Massimiliano
(86) International application number: PCT/CN2024/124652
(87) International publication number: WO 2025/148442

(57) **Abstract**

The present application provides a film grain region processing method, a device, and a storage medium. The film grain region processing method is applied to a decoding end, and comprises: on the basis of film grain region adaptive indication information corresponding to a received decoded image, determining film grain parameter indication information and region indication information; on the basis of the region indication information, determining a film grain region in the decoded image; on the basis of film grain parameters determined from the film grain parameter indication information, synthesizing film grain corresponding to the decoded image; and adding the film grain to the film grain region in the decoded image.

## Description

### TECHNICAL FIELD

The present application relates to the field of communication, and specifically relates to a method for film grain region processing, a device, and a storage medium.

### BACKGROUND

Film grain synthesis is a widely utilized technique in video coding. Generally, different film grain schemes are required to be provided for different regions of the same frame of image due to differences in texture or brightness, or differences between a foreground region and a background region, or differences between a current viewing angle region and a non-current viewing angle region in an immersive video. The different film grain schemes include whether a film grain is enabled, or whether different film grain models are enabled. Specifying these different regions usually introduces a certain bit overhead. Meanwhile, in view of the multi-region scenarios discussed above, various distinct region description methods have already been defined. If the different regions for applying the film grain coincide with pre-existing regions defined by these various methods, the bit overhead that would otherwise be incurred by repeatedly redefining these regions can be effectively eliminated.

### SUMMARY

In view of this, provided are a method for film grain region processing, a device, and a storage medium in various embodiments of the present application, thereby achieving an effect of flexibly defining different types of regions without introducing an excessive bitrate overhead.

According to an embodiment of the present application, a method for film grain region processing applied to a decoder side is provided. The method includes:
- determining film grain parameter indication information and region indication information according to received film grain region adaptive indication information corresponding to a decoded picture;
- determining a film grain region in the decoded picture according to the region indication information; -synthesizing a film grain corresponding to the decoded picture according to a film grain parameter determined by the film grain parameter indication information; and
- blending the film grain into the film grain region in the decoded picture.

According to an embodiment of the present application, a method for film grain region processing applied to an encoder side is provided. The method includes:
- performing film grain region adaptive modeling on a source picture, to generate corresponding film grain parameter indication information and corresponding region indication information;
- generating corresponding film grain region adaptive indication information according to the film grain parameter indication information and the region indication information; and
- writing the film grain region adaptive indication information into an encoded bitstream corresponding to a source picture, and sending the encoded bitstream into which the film grain region adaptive indication information is written, to a decoder side.

According to an embodiment of the present application, a communication apparatus is provided. The apparatus includes a memory and one or more processors.

The memory is configured to store at least one program which, when executed by the at least one processor, causes the at least one processor to carry out any one of the methods as described above.

According to an embodiment of the present application, a computer-readable storage medium is provided. The medium stores a computer program which, when executed by a processor, causes the processor to carry out any one of the methods as described above.

### BRIEF DESCRIPTION OF DRAWINGS

FIG. 1 depicts a block diagram of a film grain system applied in video encoding and decoding set forth in the related art;
FIG. 2 depicts a flowchart showing a method for film grain region processing according to an embodiment of the present application;
FIG. 3 depicts a flowchart showing a method for film grain region processing according to another embodiment of the present application;
FIG. 4 depicts a flowchart of a video picture bitstream decoding method according to an embodiment of the present application;
FIG. 5 depicts a flowchart of in implementation of determining a film grain region according to an embodiment of the present application;
FIG. 6 depicts a flowchart of a video picture bitstream encoding method according to an embodiment of the present application;
FIG. 7 depicts a schematic diagram of a device for film grain region processing according to an embodiment of the present application;
FIG. 8 depicts a schematic diagram showing a device for film grain region processing according to another embodiment of the present application; and
FIG. 9 depicts a schematic diagram showing a communication apparatus according to an embodiment of the present application.

### DETAILED DESCRIPTION

Some embodiments of the present disclosure will be further illustrated with reference to the drawings. Some embodiments of the present disclosure will be described below with reference to the accompanying drawings. It should be understood that the embodiments described herein are intended only for illustration of the present disclosure, but are not intended for limitations to the present disclosure.

Film grain is generated during the physical process of exposure and development of photographic films (the exposure and development of silver halide crystals), and film grain is a ubiquitous feature in film and television content. Digital sensors, however, do not involve this process, resulting in noise-free digital video without any film grain. Many content creators, particularly in the movie industry, generally consider film grain to be a pleasant noise capable of enhancing the natural appearance of video content. Re-adding film noise to videos can improve the visual experience, which is usually considered part of creative intent.

Because video picture compression heavily relies on temporal, spatial, or cross-component predictions, while film grain is random in nature, film grain poses a significant challenge for encoding with conventional video encoding tools. To preserve film grain, one approach is to employ a relatively low quantization parameter (QP) during video compression to better retain fine details. However, this incurs a relatively high bitrate, which is impractical for video applications such as adaptive streaming and broadcasting. Another approach is to model film grain at the encoder side to obtain film grain parameters, which are then utilized at the decoder side to synthesize and add the film grain back to the decoded video pictures. This approach fully unleashes the potential of video compression technologies. For instance, existing High Efficiency Video Coding (HEVC) and Versatile Video Coding (VVC) schemes employ a Film Grain Characteristics (FGC) Supplemental Enhancement Information (SEI) message to indicate film grain parameters used for synthesizing film grain during the decoding and rendering of video or picture data, thereby preserving the film grain.

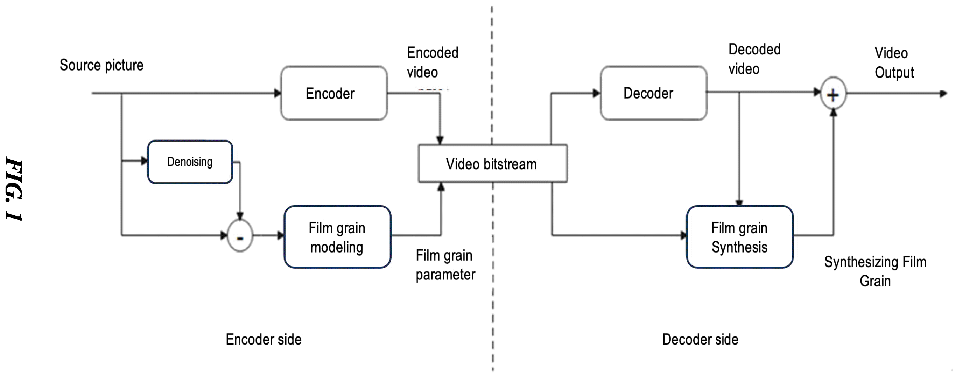

FIG. 1 depicts a block diagram showing a film grain system employed in video encoding and decoding in the related art. As illustrated in FIG. 1, at an encoder side, an input source video picture (hereinafter referred to as a source picture) is first compressed and encoded by an encoder to obtain an encoded video bitstream. Meanwhile, a denoising module pre-processes the input source video picture to perform denoising (where the encoder may also be configured to perform the denoising process), and outputs a video picture sequence from which film grain has been removed or attenuated. The film grain modeling process is essentially a film grain parameterization process. By analyzing the difference between the denoised video and the source video, film grain model parameter values are estimated. The film grain parameters may be transmitted to a decoder side along with the encoded video bitstream, or may be provided to the decoder side via an external transmission mechanism.

At the decoder side, the film grain parameters are parsed and input into a film grain synthesis process to generate simulated film grain. Before a decoded video is output, the film grain is added to the decoded video, and a decoded reconstructed video having the simulated film grain is output.

In addition to the block diagram of the film grain system illustrated in FIG. 1, other implementation manners of the film grain system also exist, where the primary difference lies in the encoder side. For example, instead of encoding a source video picture sequence to obtain an encoded video bitstream, the encoder side can encode a denoised video picture sequence to obtain an encoded video bitstream. Alternatively, when the source video does not include film grain, the encoder side can transmit a pre-determined film grain parameter to the decoder side for film grain synthesis. In this case, even if no film grain exists in the source video, film grain can be added to the video at a decoder side to achieve a certain effect.

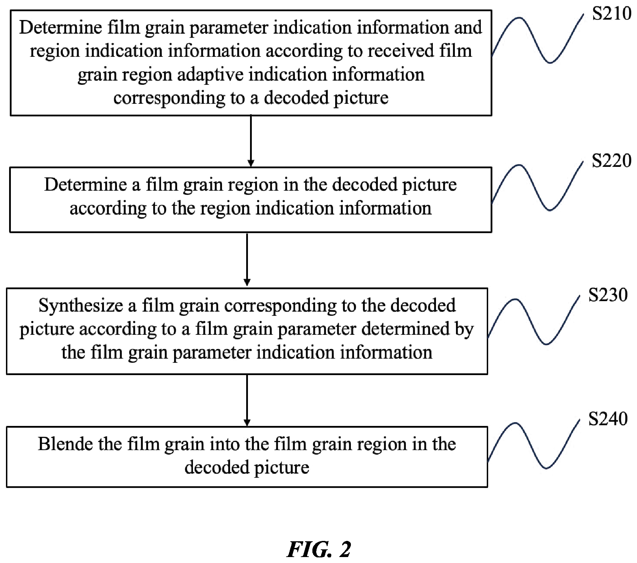

FIG. 2 depicts a flowchart showing a method for film grain region processing according to an embodiment of the present application. This embodiment is applied to a situation where adaptive processing is performed on a film grain region. This embodiment may be executed by a decoder side. As illustrated in FIG. 2, the method set forth in this embodiment includes operations S210 to S240.

At operation S210, film grain parameter indication information and region indication information are determined according to received film grain region adaptive indication information corresponding to a decoded picture.

Once a bitstream sent by an encoder side is acquired by a decoder side, the bitstream is decoded to obtain a decoded and reconstructed picture corresponding to the bitstream as a corresponding decoded picture. Parsing the bitstream to obtain the decoded picture may be implemented based on conventional video coding technologies, which will not be further detailed herein. The decoder side acquires the film grain region adaptive indication information corresponding to the decoded picture, and determines the film grain parameter indication information and region indication information according to the film grain region adaptive indication information.

For instance, the film grain region adaptive indication information may be contained within a film grain regions characteristics SEI message or a film grain region adaptive SEI message. For simplicity, the subsequent descriptions are based primarily on the film grain region adaptive SEI message as an illustrative example. When the film grain region adaptive indication information is included in the Film grain regions characteristics SEI message, the region indication information at least includes one of: a region information present flag (e.g., region_information_present_flag), a region adaptive flag (e.g., region_based_adaptation_flag), an active regions number (e.g., active_regions_number), respective region position description information (e.g., top region_top, left side region_left, length region_width, width region_height, etc.), or an alpha channel adaptive flag (e.g., alpha_channel_adaptation_flag).

At operation S220, a film grain region in the decoded picture is determined according to the region indication information.

At operation S230, a film grain corresponding to the decoded picture is synthesized according to a film grain parameter determined by the film grain parameter indication information.

At operation S240, the film grain is blended into the film grain region in the decoded picture.

Specifically, the film grain region refers to a region in the decoded picture where the film grain is applied. The decoder side blends the synthesized film grain into a corresponding region in the decoded picture where the film grain is applied.

In an embodiment, determining the film grain region in the decoded picture according to the region indication information includes: determining a region type according to the region indication information; acquiring corresponding region description information from the region indication information based on the region type; and determining the film grain region in the decoded picture according to the region description information.

In an embodiment, the region type includes at least one of, an externally defined region; or an internally defined region. By way of example, a region adaptation flag (e.g., region_based_adaptation_flag) indicates that the region type is the internally defined region, and an alpha channel adaptation flag (e.g., alpha_channel_adaptation_flag) indicates that the region type is the externally defined region.

In an embodiment, the region type is characterized by at least one of: at least one boolean parameter; or an enumeration parameter. A boolean parameter may be employed to characterize the region type, two boolean parameters may also be employed to characterize the region type, and an enumeration parameter may also be employed to characterize the region type.

In an embodiment, in a case where the region type is an externally defined region, acquiring the corresponding region description information from the region indication information based on the region type includes: acquiring an external region information source and external region indication information from the region indication information; and acquiring corresponding external region description information according to the external region information source and the external region indication information. In the case where the region type is the externally defined region, the region indication information at least includes an external region information source and/or external region indication information. The external region information source is indicative of the source information of the externally defined region. The external region indication information is indicative of region information about the externally defined region. For example, the external region indication information includes, but is not limited to, an externally defined region quantity, a region index present flag, and an externally defined region index.

In an embodiment, in a case where the region type is an internally defined region, acquiring the corresponding region description information from the region indication information based on the region type includes: directly acquiring corresponding internal region description information from the region indication information.

In an embodiment, determining the film grain region in the decoded picture according to the region indication information includes: acquiring corresponding region description information according to the region indication information; and determining the film grain region in the decoded picture according to the region description information.

In an embodiment, determining the film grain region in the decoded picture according to the region description information includes one of:
- a region corresponding to the region description information in the decoded picture is, by default, a film grain enabled region;
- a region corresponding to the region description information in the decoded picture is, by default, a film grain disabled region;
- a pre-configured film grain flag indicates whether a film grain function is enabled in a region of the decoded picture corresponding to the region description information.

In an embodiment, the region indication information at least includes one of: a region type; an external region information source; external region indication information; and external region description information.

In an embodiment, in a case where the external region information source includes an annotated region, the external region indication information at least includes one of: an externally defined region quantity; a region index present flag; or an externally defined region index.

In an embodiment, in a case where the external region information source includes an omnidirectional viewport, the external region indication information at least includes one of the following: a viewport identifier; a region quantity; or a region index.

In an embodiment, in a case where the external region information source includes a sub-picture or a sub-tile, the external region indication information at least includes one of: a sub-picture index; a sub-picture identifier; a tile index; or a tile identifier.

In an embodiment, in a case where the external region information source includes an annotated region, the region description information includes at least a topmost position of a bounding box, a leftmost position of the bounding box, a width of the bounding box, and a height of the bounding box.

In an embodiment, in a case where the external region information source includes alpha channel information, the region description information includes at least one of an alpha channel bit depth, an alpha channel transparent value, an alpha channel opaque value, an alpha channel increment flag, an alpha channel clip flag, an alpha channel clip type flag, or auxiliary picture sample information corresponding to an alpha channel information SEI message.

In an embodiment, in a case where the external region information source includes the omnidirectional viewport, the region description information includes at least one of a viewport azimuth center, a viewport elevation center, a tilt center, a viewport horizontal range, or a viewport vertical range.

In an embodiment, in a case where the external region information source includes a subpicture or a sub-tile, the region description information includes at least one of a subpicture size, a subpicture position, a sub-tile size, or a sub-tile position.

In an embodiment, the film grain region adaptive indication information includes at least film grain region adaptive SEI message enabling information, external definition region indication information, internal definition region indication information, an externally defined region quantity, an external definition region information source, a region index present flag, an externally defined region index, an internally defined region quantity, a topmost position of an internally defined region, a leftmost position of an internally defined region, a width of an internally defined region, a height of an internally defined region, film grain region adaptive SEI message persistence indication information, region type indication information, film grain function enabling information, a film grain region quantity, and a film grain parameter.

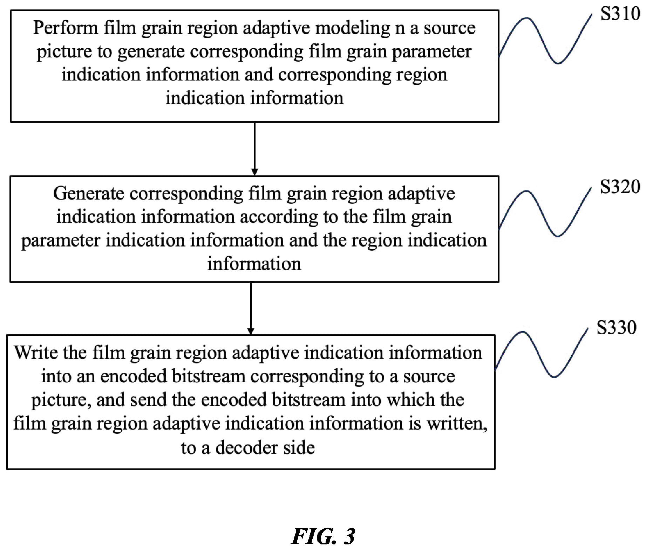

FIG. 3 depicts a flowchart showing a method for film grain region processing according to another embodiment of the present application. This embodiment is applied to a situation where adaptive processing is performed on a film grain region. This embodiment may be executed by an encoder side. As shown in FIG. 3, the method according to this embodiment includes operation S310 to S330.

At operation S310, film grain region adaptive modeling is performed on a source picture to generate corresponding film grain parameter indication information and corresponding region indication information.

At operation S320, corresponding film grain region adaptive indication information is generated according to the film grain parameter indication information and the region indication information.

At operation S330, the film grain region adaptive indication information is written into an encoded bitstream corresponding to a source picture, and the encoded bitstream into which the film grain region adaptive indication information is written, is sent to a decoder side.

In an embodiment, a picture parameter of the source picture at least includes one of: a film grain characteristic; a picture feature; or a picture texture.

Specifically, the film grain characteristic at least includes one of: an intensity of a film grain; or a scaling parameter of a film grain.

In an embodiment, performing the film grain region adaptive modeling on the source picture to generate the corresponding film grain parameter indication information and the corresponding region indication information includes:
- performing film grain region adaptive modeling on the source picture to obtain corresponding region description information, a corresponding region type, and a corresponding film grain parameter;
- generating corresponding region indication information based on the region description information and the region type; and
- generating corresponding film grain parameter indication information based on the film grain parameter.

In an embodiment, the region type includes at least one of, an externally defined region; or an internally defined region.

In an embodiment, in a case where the region type is the externally defined region, generating the corresponding region indication information based on the region description information and the region type includes:
- generating a corresponding external region information source and corresponding external region indication information based on external region description information; and
- generating the corresponding region indication information based on the external region information source and the external region indication information.

In an embodiment, in a case where the region type is the internally defined region, generating the corresponding region indication information based on the region description information and the region type includes:
directly generating the corresponding region indication information based on internal region description information.

In an embodiment, the region indication information at least includes one of: a region type; an external region information source; external region indication information; and external region description information.

In an embodiment, in a case where the external region information source includes an annotated region, the external region indication information at least includes one of: an externally defined region quantity; a region index present flag; or an externally defined region index.

In an embodiment, in a case where the external region information source includes an omnidirectional viewport, the external region indication information at least includes one of the following: a viewport identifier; a region quantity; or a region index.

In an embodiment, in a case where the external region information source includes a sub-image or a sub-tile, the external region indication information at least includes one of: a sub-image index; a sub-image identifier; a tile index; or a tile identifier.

In an embodiment, in a case where the external region information source includes an annotated region, the region description information includes at least a topmost position of a bounding box, a leftmost position of the bounding box, a width of the bounding box, and a height of the bounding box.

In an embodiment, in a case where the external region information source includes alpha channel information, the region description information includes at least one of an alpha channel bit depth, an alpha channel transparent value, an alpha channel opaque value, an alpha channel increment flag, an alpha channel clip flag, an alpha channel clip type flag, or auxiliary picture sample information corresponding to an alpha channel information SEI message.

In an embodiment, in a case where the external region information source includes the omnidirectional viewport, the region description information includes at least one of a viewport azimuth center, a viewport elevation center, a tilt center, a viewport horizontal range, or a viewport vertical range.

In an embodiment, in a case where the external region information source includes a subpicture or a sub-tile, the region description information includes at least one of a subpicture size, a subpicture position, a sub-tile size, or a sub-tile position.

In an embodiment, the film grain region adaptive indication information includes at least film grain region adaptive SEI message enabling information, external definition region indication information, internal definition region indication information, an externally defined region quantity, an external definition region information source, a region index present flag, an externally defined region index, an internally defined region quantity, a topmost position of an internally defined region, a leftmost position of an internally defined region, a width of an internally defined region, a height of an internally defined region, film grain region adaptive SEI message persistence indication information, region type indication information, film grain function enabling information, a film grain region quantity, and a film grain parameter.

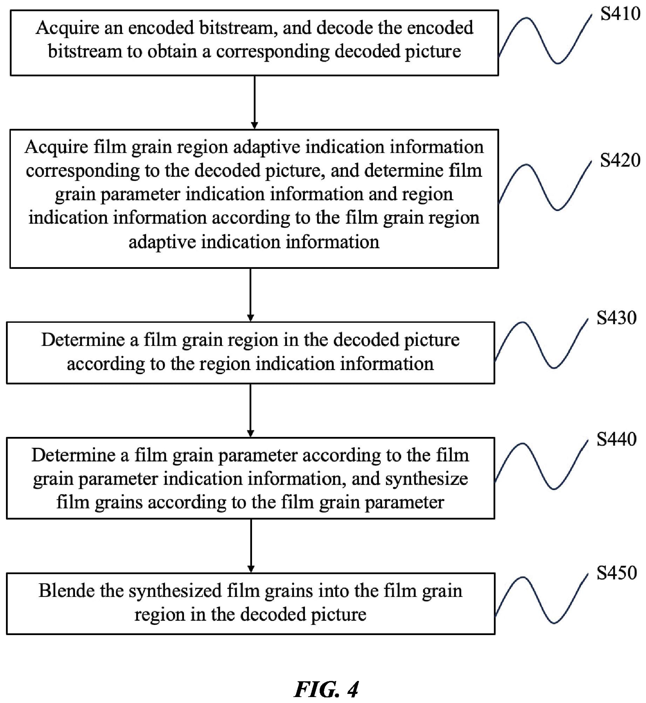

FIG. 4 depicts a flowchart of a video picture bitstream decoding method according to a first embodiment of the present application. This embodiment is applied to a device configured to decode video bitstreams, and perform adaptive processing on a film grain region. An input of the apparatus is a video picture bitstream or a media file, and an output is a decoded and reconstructed video picture. As illustrated in FIG. 4, a decoding process of the video picture bitstream in this embodiment includes the following operations.

At operation S410, an encoded bitstream is acquired, and the encoded bitstream is decoded to obtain a corresponding decoded picture.

The decoder side acquires the encoded bitstream and decodes the encoded bitstream to obtain a decoded and reconstructed picture corresponding to the encoded bitstream, i.e., the decoded picture. Parsing the bitstream to obtain the decoded picture may be performed according to a method specified in a video coding standard corresponding to a type of the bitstream, and details thereof are not repeatedly described herein.

It should be noted that a video is composed of a sequence of continuous pictures. A picture in the embodiments of the present application may refer to a single standalone picture or a frame within a video sequence. Therefore, terms such as video, video picture, or picture mentioned in subsequent descriptions may be used interchangeably.

At operation S420, film grain region adaptive indication information corresponding to the decoded picture is acquired, and film grain parameter indication information and region indication information are determined according to the film grain region adaptive indication information.

The film grain region adaptive indication information indicates that different regions in the decoded picture may correspond to different film grain strategies. Under the different film grain strategies, film grain may be added only to some regions in the decoded picture, while no film grain is added to the remaining regions. Alternatively, the different regions in the decoded picture correspond to different types of film grains.

The film grain region adaptive indication information may be a film grain region adaptive flag (denoted as *fg_region_adaptive_flag*) indicating whether film grain region adaptive processing is enabled for the video picture. The film grain region adaptive flag may be included in a Video Parameter Set (VPS), a Sequence Parameter Set (SPS), a Picture Parameter Set (PPS), or an Adaptation Parameter Set (APS), or may be included in a specific SEI message.

The film grain region adaptive indication information may be an SEI message type or an SEI message name, which determines execution of a film grain region adaptive strategy on a decoded picture. For instance, when a film grain region adaptive SEI message is received by the decoder, the SEI message of this type itself serves as the film grain region adaptive indication information.

There is no necessary chronological order between acquiring the film grain region adaptive indication information corresponding to the decoded picture and parsing the bitstream to obtain the decoded picture in S410. They may be performed simultaneously; alternatively, the bitstream may be parsed to obtain the decoded picture before the film grain region adaptive indication information is acquired; or alternatively, the film grain region adaptive indication information may be acquired before the bitstream is parsed to obtain the decoded picture.

The film grain region adaptive indication information may be included in the bitstream, or may be acquired by means of other pre-configured methods. Subsequent embodiments will be primarily illustrated with different positions included in the bitstream.

At operation S430, a film grain region in the decoded picture is determined according to the region indication information.

Determining the region in the decoded picture where the film grain is applied according to the region indication information includes: determining one or more of a region quantity, a region position, a region shape, a region size, a region index, etc., in the decoded picture where the film grain is applied.

The region indication information at least includes one or more of a region type, an external region information source, external region indication information, and region description information. The region type can be indicative of an externally defined region and/or an internally defined region. The internally defined region indicates that the region description information corresponding to the region being referred to is included in the SEI message of the film grain region adaptive indication information. Conversely, the externally defined region indicates that the region description information corresponding to the region being referred to is not included in the SEI message of the film grain region adaptive indication information. When the region type includes the externally defined region, the region indication information further at least includes the external region information source. Region description information of the external region can be acquired according to the external region information source, whereby the region in the decoded picture where the film grain is applied is determined. When the region type includes the internally defined region, the region indication information further at least includes internal region description information, and the region in the decoded picture where the film grain is applied is determined according to the internal region description information.

At operation S440, a film grain parameter is determined according to the film grain parameter indication information, and film grains are synthesized according to the film grain parameter.

The film grain parameter includes, but is not limited to, a film grain model parameter and a film grain processing parameter corresponding to a film grain processing method indicated by the film grain model parameter. The film grain model parameter may be a film grain model identifier, and the film grain processing parameter may also be referred to as a film grain synthesis parameter or a film grain modeling parameter.

The determined film grain parameters may be one set of film grain parameters or multiple sets of film grain parameters. When multiple sets of film grain parameters are determined, multiple corresponding sets of film grain may be synthesized respectively according to each set of film grain parameters.

There is no necessary chronological order between S430 and S440. In practical applications, the execution order of S430 and S440 may be interchanged, or S430 and S440 may be performed simultaneously.

At operation S450, the synthesized film grains are blended into the film grain region in the decoded picture.

An additive method, a multiplicative method, or any other existing computation method may be employed for blending the film grain into the decoded picture. The method for blending the film grains to the decoded picture may be determined by the film grain parameter discussed in operation S440, or may be decided by the decoder side according to a pre-configured parameter.

When multiple sets of film grain parameters are determined in operation S440, the synthesized multiple sets of film grain may be respectively blended into regions corresponding to the film grain parameters.

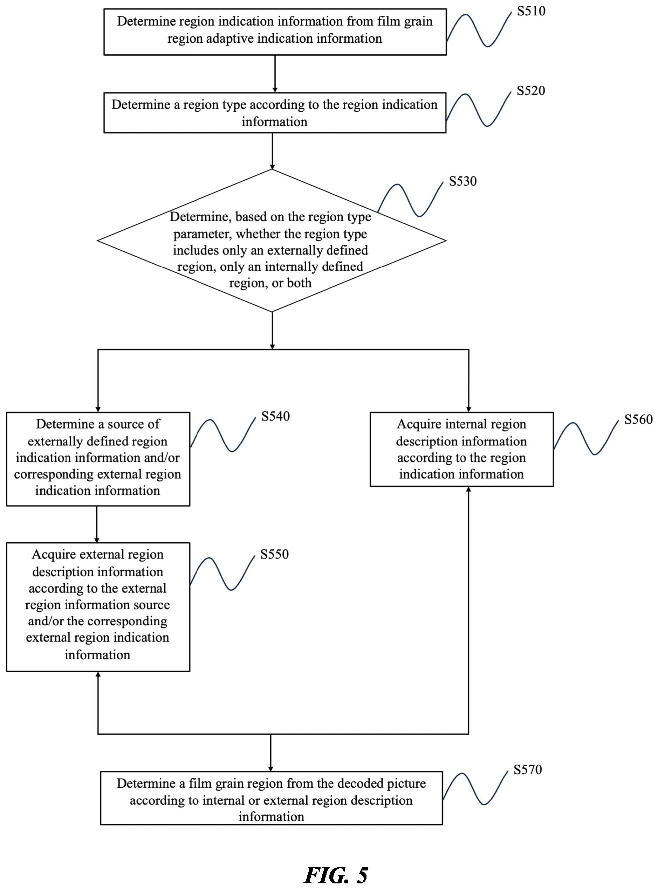

FIG. 5 depicts a flowchart of in implementation of determining a film grain region according to a second embodiment of the present application. The present disclosure provides specific examples for determining region indication information based on film grain region adaptive indication information, and for determining a region in a decoded picture to which film grain is applied based on the region indication information. As illustrated in FIG. 5, the method set forth in this embodiment includes the following operations.

At operation S510, region indication information is determined from film grain region adaptive indication information.

The region indication information is determined from the film grain region adaptive indication information with reference to S410 and S420 in the first embodiment discussed above.

At operation S520, a region type is determined according to the region indication information.

The region type includes an internally defined region and an externally defined region. An internally defined region means that region description information is included in the film grain region adaptive indication information. Conversely, an externally defined region means that the region description information is not included in the film grain region adaptive indication information, and needs to be further acquired from another source.

A region type parameter indicative of the region type may be a Boolean parameter, e.g., *'RegionType'.* The value of *'RegionType'* equal to '0' indicates that the region type is the externally defined region, and with the value of which equal to '1' indicates that the region type is the internally defined region.

The region type parameter indicative of the region type may also be an enumeration parameter, e.g., *'RegionType'*, including a plurality of values. For example, the value of *'RegionType'* equal to '0' indicates that the region type is the externally defined region; with the value of which equal to '1' indicates that the region type is the internally defined region; and with the value of which equal to '2' indicates that the region type includes both the externally defined region and the internally defined region.

The region type parameter indicative of the region type may also be two boolean parameters, e.g., *'region_external_flag'* and *'region_internal_flag',* respectively indicating the inclusion of an externally defined region and an internally defined parameter. For example, the value of *region*_*external_flag* equals to '1', indicates that the region type includes an external region, with the value of *'region_external_flag'* equals to '0', indicating that the region type does not include an external region. The value of *'region_internal_flag* equals to '1', indicates that the region type includes an internal region, with the value of *'region_internal_flag'* equals to '0', indicating that the region type does not include an internal region.

It should be understood that the foregoing descriptions are provided by way of example only. In practical applications, the region type parameter is not limited to the instances illustrated herein.

At operation S530, a determination is performed, based on the region type parameter, whether the region type includes only an externally defined region, only an internally defined region, or both; in response to determining that only the externally defined region is included, operation S540 is performed; in response to determining that only the internally defined region is included, operation S560 is performed; and in response to determining that both the externally defined region and the internally defined region are included, S540 and S560 are performed respectively.

At operation S540, a source of externally defined region indication information and/or corresponding external region indication information are determined.

An external region information source *'RegionSource'* and the corresponding external region indication information are determined according to the region indication information in the film grain region adaptive indication information. One or more external region information sources may exist. In conventional techniques, region partitioning methods within a video picture have been defined, and respective partitioned regions are identified through various description methods. Various existing region partitioning description information and region partitioning description information that may be formulated in the future can all be employed as the external region information source in the scheme of the present application. The following table provides an example of the external region information source.

**Table 1 Table of Mapping Relationships Between External Region Information Sources and Different Values**

| Value | Description of External Region Information Source |
|---|---|
| 0 | annotated regions |
| 1 | alpha channel information |
| 2 | Omnidirectional viewport |
| 3 | subpictures / tiles |
| 4...5 | Reserved |

The corresponding external region indication information may vary depending on different external region information sources. Alternatively, for certain types of external region information sources, once the external region information source is determined, the external region description information can be determined, in which case the corresponding external region indication information may not be required. The external region indication information may include at least one or more of information such as an externally defined region quantity, a region index present flag, an externally defined region index, and an externally defined region identifier.

For example, the value of *'RegionSource'* equals to '0' indicates that the externally defined region information originates from annotated regions. The corresponding external region indication information may include at least one or more of a region quantity (e.g., *'num_regions')* and a region index (e.g., *'region_index').*

The value of *'RegionSource'* equals to '1' indicates that the externally defined region information originates from an Alpha channel. In this case, the external region indication information need not be present.

Alternatively, the value of *'RegionSource'* equals to '2' indicates that the externally defined region information originates from an omnidirectional viewport. The corresponding external region indication information may include at least one or more of a viewport identifier (e.g., *'viewport_id'*), a region quantity (e.g., *'num_regions'),* and a region index (e.g., *'region_index').*

Alternatively, the value of *'RegionSource'* equals to '3' indicates that the externally defined region information originates from subpictures or tiles. The corresponding external region indication information may include at least one or more of a region quantity (e.g., *'num_regions'),* an index or identifier of a subpicture, and an index or identifier of a tile.

At operation S550, external region description information is acquired according to the external region information source and/or the corresponding external region indication information.

Specific information contained in the external region description information is determined in accordance with the external region information source, and may vary depending on the external region information source. For example:
When externally defined region information originates from annotated regions, a corresponding annotated regions SEI message is acquired. Then, a corresponding quantity of external region description information is acquired according to an externally defined region quantity (e.g., *'num_regions'),* a region index present flag (e.g., *'region_index_present_flag'* ), and an externally defined region index (e.g., *'region_index')* in the external region indication information. When a value of an object index (e.g., *'object_idx')* in the annotated Regions SEI message is equal to a value of the externally defined region index *(region_index),* region description information corresponding to the object index is determined as the external region description information to be acquired. Each external region description information may include a topmost position of a bounding box (e.g., *'bounding_box*_*top'),* a leftmost position of the bounding box (e.g., *`bounding box left'),* a width of the bounding box (e.g., *'bounding_box_width'),* and a height of the bounding box (e.g., *'bounding_box*_*height').*

When externally defined region information originates from Alpha channel information, a corresponding Alpha channel information SEI message is acquired. The external region description information may include some or all of the following information: an alpha channel bit depth (e.g., *'alpha*_*channel*_*bit_depth'),* an alpha transparent value (e.g., *'alpha_transparent_value'),* an alpha opaque value (e.g., *'alpha_opaque_value'),* an alpha channel increment flag (e.g., *'alpha_channel_incr_flag'*), an alpha channel clip flag (e.g., *'alpha_channel_clip_flag*'), an alpha channel clip type flag (e.g., *'alpha*_*channel*_*clip*_*type_flag'*), and auxiliary coded picture sample information corresponding to the Alpha channel information SEI message.

When externally defined region information originates from an Omnidirectional viewport, a corresponding Omnidirectional viewport SEI message is acquired. Then, region description information of a corresponding number is acquired according to a region quantity (e.g., *'num_regions')* and a region index (e.g., *'region_index'*) contained in the region indication information. Each external region description information in the Omnidirectional viewport SEI message may include a viewport azimuth center (e.g., *'viewport_azimuth_centre*')*,* a viewport elevation center (e.g., *'viewport_elevation_centre*')*,* a tilt center (e.g., *'viewport_tilt_centre'*), a viewport horizontal range (e.g., *'viewport_hor_range*'), and a viewport vertical range (e.g., *'viewport_ver_range*').

When externally defined region information originates from a subpicture or a subTile, external region description information of a corresponding number is acquired according to a region quantity (e.g., *'num_regions*') and a region index (e.g., *'region_index')* in the region indication information. The region index may be a serial number of a subpicture or a serial number of a tile. The region description information may include a size, a position, etc. of the subpicture and the tile.

It should be noted that acquiring the external region description information originating from the corresponding SEI message according to the external region information source herein serves merely as an embodiment. In practical applications, the acquired external region description information may originate from any type of region indication information.

At operation S560, internal region description information is acquired according to the region indication information.

Internal region description information is acquired according to the region indication information contained in the film grain region adaptive indication information. Specifically, the internal region description information corresponds to the internally defined region.

The region description information is indicative of a region in a decoded picture where the film grain parameter is applied. The region indication information may be described by a region position and a region size. For example, a rectangular region may be determined based on a top-right vertex position, a width, and a height of the rectangular region. Alternatively, the region indication information may be described by a size and an index of a block. For example, for a position of an eighth 8×8 adaptive processing block, a size of the adaptive processing block may be pre-configured or determined based on other methods, such as defining sizes and sequences of a plurality of optional adaptive processing blocks, whereby a size of an employed adaptive block is identifiable based on a given index.

At operation S570, a film grain region is determined from the decoded picture according to internal or external region description information.

Since the region description information is indicative a position region in the decoded picture where the film grain parameter is applied, a corresponding region in the decoded picture is first determined based on the region description information, and a region in the decoded picture where the film grain is applied is subsequently determined. Specifically, determining the corresponding region in the decoded picture based on the region description information is known in the art. Schemes for determining a region in the decoded picture to which film grain is applied based on the region description information include, but are not limited to: a case where a corresponding region in the decoded picture determined based on the region description information is, by default, an enabled film grain region; or a case where a corresponding region in the decoded picture determined based on the region description information is, by default, a disabled film grain region. Furthermore, a film grain flag may be configured for each region to indicate whether the film grain is enabled, such that whether a film grain function is enabled within a region in the decoded picture determined based on the region description information is indicated via the film grain flag.

According to a third embodiment of the present application, an example SEI message for adaptive processing of a film grain region is provided. The syntax structure and corresponding semantics thereof (provided in Table 2 below) represent a combined implementation of the various aspects disclosed in the first and second embodiments.

To ensure operational clarity, a parsing process and corresponding encapsulation schemes of the SEI message are provided herein as a supplementary description prior to specifying the details. Before a SEI message is acquired, a Network Abstraction Layer unit (NAL unit) is first obtained from the bitstream by a decoder. The NAL unit is the basic syntax structure of the bitstream, and each NAL unit includes header information (e.g., *nal_unit_header*) and Raw Byte Sequence Payload (RBSP) information. The header information of the NAL unit further includes NAL unit type information (e.g., *nal_unit_type*). The value of *nal_unit_type* equals to '23' indicates that the NAL unit is a *PREFIX_SEI_NUT,* i.e., a prefix SEI NAL unit. The value of *nal_unit_type* equals to '24' indicates that the NAL unit is a *SUFFIX_SEI_NUT,* i.e., a suffix SEI NAL unit. In the scheme of the present application, the film grain region adaptive (*film_grain_adaptive_region*) SEI message is not limited to the *PREFIX_SEI_NUT* or the *SUFFIX_SEI_NUT.* Upon determining that a NAL unit type is associated with an SEI message, RBSP data within the NAL unit is parsed based on an RBSP syntax structure corresponding to the SEI message, as provided in Table 2. An SEI RBSP may include one or more SEI messages (e.g., *sei_message*).

**Table 2 Schematic Table of Syntax Structure of SEI RBSP**

| | |
|---|---|
| sei_rbsp(){ | Descriptor |
| do | |
| **sei_message()** | |
| while(more_rbsp_data()) | |
| rbsp_trailing_bits() | |
| } | |

A syntax structure of sei_message() is as shown in the following table (Table 3), which includes a syntax element *payload_type* indicating a type of the SEI message.

**Table 3 Schematic Table of Syntax Structure of SEI Message**

| | |
|---|---|
| sei_message( ) { | Descriptor |
| ...... | |
| payload_type_byte | u(8) |
| payloadType + = payload_type_byte | |
| ...... | |
| payload_size_byte | u(8) |
| payloadSize += payload_size_byte | |
| ...... | |
| sei_payload( payloadType, payloadSize ) | |
| } | |

Once the type of the SEI message is determined, parameter to be transmitted by the SEI message can be further obtained by parsing according to a *sei_payload()* syntax structure corresponding to the SEI message of this type (as shown in Table 3).

**Table 4 Schematic Table of sei_payload() Syntax Structure**

| | |
|---|---|
| sei_payload( payloadType, payloadSize ) { | Descriptor |
| if( nal_unit_type = = PREFIX_SEI_NUT ) | |
| if( payloadType = = 0 ) | |
| buffering_period( payloadSize ) | |
| ...... | |
| else /* nal_unit_type = = SUFFIX_SEI_NUT */ | |
| if( payloadType = = 3 ) | |
| filler_period( payloadSize ) | |
| ...... | |
| } | |

According to the present application, a *payloadType* value of the film grain region adaptive (e.g., *film_grain_adaptive_region*) SEI message is required to be distinct from *payloadType* values of other existing SEI messages (for example, the value may be '8'). Through the parsing described above, a decoder side determines that the SEI message is the film grain region adaptive (e.g., *film_grain_adaptive_region*) SEI message, which is employable as the region adaptive indication information in the first embodiment or the second embodiment.

A payload syntax structure of the film grain region adaptive (e.g., *film_grain_adaptive_region*) SEI message may be shown as the following table:

**Table 5 Schematic Table of payload() Syntax Structure of Film Grain Region Adaptive SEI Message**

| | |
|---|---|
| film_grain_adaptive_region( payloadSize ) | Descriptor |
| **fga_region_cancel_flag** | u(1) |
| if(!fga_region_adaptive_cancel_flag){ | |
| **fga_region_external_flag** | u(1) |
| **fga_region_internal_flag** | u(1) |
| if(fga_region_external_flag){ | |
| **fga_num_regions_external_minus1** | ue(v) |
| for(i=0; i<=fga_num_regions_external_minus1;i++){ | |
| **fga_regions_source[i]** | u(2) |
| **fga_region_external_index[i]** | ue(v) |
| **fga_region_index_present_flag** | u(1) |
| if(fga_region_index_present_flag) | |
| **fga_region_external_index[i]** | ue(v) |
| } | |
| } | |
| if(fga_region_internal_flag) { | |
| **fga_num_regions_internal_minus1** | ue(v) |
| for(i=0; i<=fga_num_regions_internal_minus1;i++){ | |
| **fga_region_internal_top[i]** | u(16) |
| **fga_region_internal_left[i]** | u(16) |
| **fga_region_internal_width[i]** | u(16) |
| **fga_region_internal_height[i]** | u(16) |
| } | |
| } | |
| **fga_region_persistent_flag** | u(1) |
| } | |

Semantics for respective syntax elements in the film grain region adaptive (e.g., *film_grain_adaptive_region*) SEI message are specified as follows:
The film grain region adaptive SEI message enabling information *fga_region_cancel_flag* with the value equals to '1' indicates that the film grain region adaptive SEI message cancels the persistence of any previous film grain region adaptive SEI message and that the corresponding film grain region adaptive function is disabled. Conversely, the value of *fga*_*region*_*cancel_flag* equals to '0', indicates that the information immediately following is film grain adaptive region information.

When this syntax element is not present, the value of *fga*_*region*_*cancel_flag* is inferred to be equal to '0'.

The external definition region indication information *fga*_*region*_*external_flag* with the value equals to '1' indicates that an externally defined region is present, with the value equals to '0' indicates that the externally defined region is not present.

The internal definition region indication information *fga_region_internal_flag* with the value equals to '1' indicates that an internally defined region is present, with the value equals to '0' indicates that the internally defined region is not present.

The externally defined region quantity *fga*_*num*_*regions_external_minus1,* with the value plus '1' indicates the number of externally defined regions.

The externally defined region information source *fga*_*regions_source[i]* indicates the source of the i-th externally defined region. Reference may be made to operation S540 in the second embodiment for the semantics of the value of *fga*_*regions_source[i].*

The region index present flag *fga_region_index_present_flag,* with the value equals to '1' indicates that an externally defined region index is present, and with the value equals to '0' indicates that the externally defined region index is not present.

The externally defined region index *fga*_*region*_*external_index[i]* indicates the i-th externally defined region index. A region position of the i-th externally defined region is determined based on the externally defined region index and the external definition region information source *(fga*_*regions_source[i]*).

The internally defined region quantity *fga_num_regions_internal_minus1,* with the value plus '1' indicates the number of internally defined regions.

The topmost position of internally defined region *fga*_*region*_*internal_top[i]:* indicates the topmost position of the i-th internally defined region.

The leftmost position of internally defined region *fga*_*region*_*internal_left[i]:* indicates the leftmost position of the i-th internally defined region.

The Width of internally defined region *fga*_*region*_*internal_width[i]:* indicates the width of the i-th internally defined region.

The height of internally defined region *fga_region_internal_height[i]:* indicates the height of the i-th internally defined region.

The film grain region adaptive SEI message persistence indication information *fga_region_persistent_flag:* indicates persistence of a current film grain region adaptive SEI message. The value of a persistence flag *(fga_region_persistent_flag*) equals to '0', indicates that the film grain region adaptive SEI message is only applicable to a currently decoded (sub-) picture. The value of a persistence flag *(fga_region_persistent_flag*) equals to '1', indicates that the film grain region adaptive SEI message is persistent for the currently decoded picture or subpicture and remains persistent for subsequently decoded pictures or subpictures within a persistence scope *(persistence_scope*). For example, the persistence scope *(persistence_scope*) of a film grain region adaptive SEI message may be an Access Unit (AU), or an encoded video sequence (CVS), or unspecified, and the present application is not limited thereto. When this syntax element is not present, the value of *fga_region_persistent_flag* is inferred to be equal to '0'.

According to a fourth embodiment of the present application, an example SEI message for adaptive processing of a film grain region is provided. The syntax structure and corresponding semantics thereof (provided in the table below) represent a combined implementation of the various aspects disclosed in the first and second embodiments.

**Table 6 - Syntax table for payload() of another film grain region adaptive SEI message**

| | |
|---|---|
| film_grain_adaptive (payloadSize) | Descriptor |
| **fga_region_cancel_flag** | u(1) |
| if(!fga_region_adaptive_cancel_flag){ | |
| **fga_region_type** | u(1) |
| **fga_region_enabled_flag** | u(1) |
| **fga_num_regions_minus1** | u(2) |
| for(i=0; i<=fga_num_regions_minus1;i++){ | |
| if(fga_region_enabled_flag) | |
| **fga_characteristic_parameters()[i]** | |
| if(!fga_region_type){ | |
| **fga_regions_source[i]** | uv(e) |
| if (fga_regions_source[i] !=1) | |
| **fga_region_external_index[i]** | ue(v) |
| } | |
| else { | |
| **fga_region_internal_top[i]** | u(16) |
| **fga_region_internal_left[i]** | u(16) |
| **fga_region_internal_width[i]** | u(16) |
| **fga_region_internal_height[i]** | u(16) |
| } | |
| } | |
| **fga_region_persistent_flag** | u(1) |
| } | |

Semantics for respective syntax elements in the film grain region adaptive (*film_grain_adaptive_region*) SEI message are specified as follows.

*fga_region_cancel_flag:* the description of which provided in the third embodiment applies here.

The region type indication information *fga*_*region*_*type:* with the value equals to '1' indicates an internally defined region, with the value equals to '0' indicates an externally defined region.

The film grain function enabling information *fga_region_enabled_flag:* with the value equals to '1' indicates that a film grain function is enabled for the internally defined region or the externally defined region; with the value equal to '0' indicates that the film grain function is disabled for the internally defined region or the externally defined region.

The film grain region quantity *fga_num*_*regions_minus1:* with the value plus '1' (+1) equals to the quantity of regions where film grains are applied, with the condition of the region quantity not exceeding 4 satisfied.

The film grain parameter *fga_characteristic_parameters[i]* specifies film grain parameters applied to the i-th region, without limitation on the specific manner of indicating the film grain parameters. The film grain parameters may be explicitly included in the current SEI message, derived based on a given film grain model, or obtained from another film grain SEI message based on an identifier of the other film grain SEI message.

*fga_regions_source:* the description of which provided in the third embodiment applies here.

When a region source is not equal to '1' (Alpha Channel Information), region index information needs to be further provided.

*fga_region_external_index[i]:* the description of which provided in the third embodiment applies here.

*fga_region_internal_top[i]:* the description of which provided in the third embodiment applies here.

*fga_region_internal_left[i]:* the description of which provided in the third embodiment applies here.

*fga_region_internal_width[i]:* the description of which provided in the third embodiment applies here.

*fga_region_internal_height[i]:* the description of which provided in the third embodiment applies here.

*fga_region_persistent_flag:* the description of which provided in the third embodiment applies here.

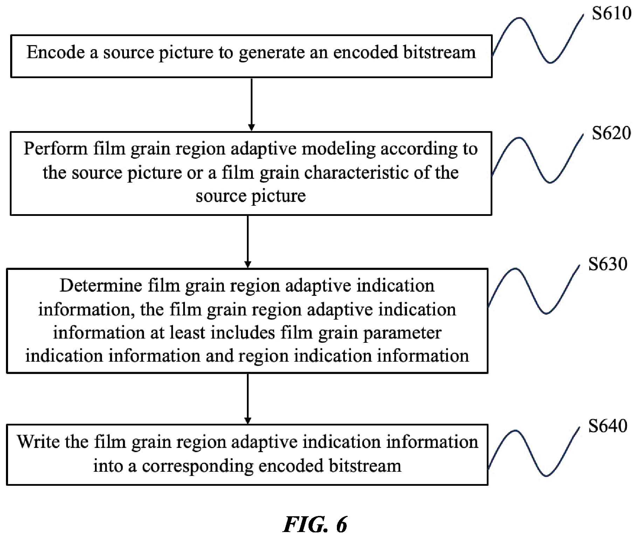

FIG. 6 depicts a flowchart of a method for video picture bitstream decoding according to a fifth embodiment of the present application. This embodiment is applied to a device configured to encode the input video picture, and perform adaptive processing on a film grain region. An input of the device is a source video picture (referred to as a source picture for short), and an output is a video picture bitstream or a media file. As illustrated in FIG. 6, an encoding process on the source picture in this embodiment includes the following operations.

At operation S610, a source picture is encoded to generate an encoded bitstream.

The picture may be a single picture or a certain frame of picture in a video sequence. Various existing technologies may be employed to encode pictures into a bitstream. Because the specific encoding standard deployed is not a limiting feature of the present disclosure, repetitive descriptions thereof are omitted.

At operation S620, film grain region adaptive modeling is performed according to the source picture or a film grain characteristic of the source picture.

The film grain characteristic may include a film grain characteristic of the entire picture or respective film grain characteristics of different regions in the picture. The film grain characteristic includes, but is not limited to, a film grain intensity, a film grain scaling parameter, or a combination thereof.

The region adaptive film grain modeling may include performing film grain modeling solely on partial regions based on the film grain characteristics of the different regions in the picture, or performing separate film grain modeling for respective regions based on the film grain characteristics of the different regions in the picture. The film grain modeling applied to the different regions may be identical to or distinct from each other. When an identical film grain modeling is applied to the different regions, film grain parameters corresponding to the different regions may be not completely identical to each other.

When no film grain is present in an original picture, film grains may be added to the original picture first, and then the region adaptive modeling is performed based on a characteristic of the added film grains. Alternatively, a film grain region adaptive modeling may be directly determined based on a picture feature, a picture texture, or a combination thereof.

At operation S630, film grain region adaptive indication information is determined, the film grain region adaptive indication information at least includes film grain parameter indication information and region indication information.

The film grain region adaptive indication information corresponding to the picture is determined according to the region adaptive film grain modeling process applied in S620. The film grain region adaptive indication information at least includes the film grain parameter indication information and the region indication information.

At operation S640, the film grain region adaptive indication information is written into a corresponding encoded bitstream.

The bitstream may be a picture bitstream or a transport stream or a media file including the picture bitstream.

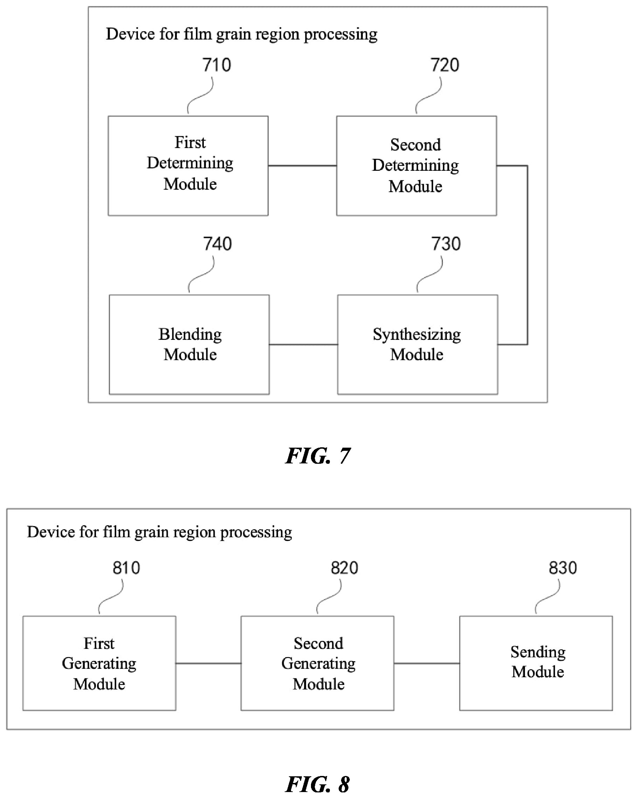

FIG. 7 depicts a schematic diagram showing a device for film grain region processing according to an embodiment of the present application. This embodiment is applied to a decoder side. As illustrated in FIG. 7, the device includes: a first determining module 710, a second determining module 720, a synthesizing module 730, and a blending module 740.

The first determining module 710 is configured to determine film grain parameter indication information and region indication information according to received film grain region adaptive indication information corresponding to a decoded picture.

The second determining module 720 is configured to determine a film grain region in the decoded picture according to the region indication information.

The synthesizing module 730 is configured to synthesize a film grain corresponding to the decoded picture according to a film grain parameter determined by the film grain parameter indication information.

The blending module 740 is configured to blend the film grain into the film grain region in the decoded picture.

In an embodiment, the second determining module 720 includes:
- a first determining unit, configured to determine a region type according to the region indication information;
- a first acquiring unit, configured to acquire region description information from the region indication information based on the region type; and
a second determining unit, configured to determine a film grain region in the decoded picture according to the region description information.

In an embodiment, the region type includes at least one of, an externally defined region; or an internally defined region.

In an embodiment, the region type is characterized by at least one of: at least one Boolean parameter; or an enumeration parameter.

In an embodiment, in a case where the region type is the externally defined region, the first acquiring unit includes:
- a first acquiring sub-unit, configured to acquire an external region information source and external region indication information from the region indication information; and
- a second acquiring sub-unit, configured to acquire corresponding external region description information according to the external region information source and the external region indication information.

In an embodiment, in a case where the region type is the internally defined region, the first acquiring unit is configured to directly acquire corresponding internal region description information from the region indication information.

In an embodiment, the second determining module includes:
- a second acquiring unit, configured to acquire corresponding region description information according to the region indication information; and
- a third determining unit, configured to determine the film grain region in the decoded picture according to the region description information.

In an embodiment, the third determining unit is configured to:
- determine by default, a region corresponding to the region description information in the decoded picture as a film grain enabled region; or
- determine by default, a region corresponding to the region description information in the decoded picture as a film grain disabled region; or
- determine by a pre-configured film grain flag as to whether a film grain function is enabled in a region of the decoded picture corresponding to the region description information.

In an embodiment, the region indication information at least includes one of: a region type; an external region information source; external region indication information; and external region description information.

In an embodiment, in a case where the external region information source includes an annotated region, the external region indication information at least includes one of: an externally defined region quantity; a region index present flag; or an externally defined region index.

In an embodiment, in a case where the external region information source includes an omnidirectional viewport, the external region indication information at least includes one of the following: a viewport identifier; a region quantity; or a region index.

In an embodiment, in a case where the external region information source includes a sub-picture or a sub-tile, the external region indication information at least includes one of: a sub-picture index; a sub-picture identifier; a tile index; or a tile identifier.

In an embodiment, in a case where the external region information source includes an annotated region, the region description information includes at least a topmost position of a bounding box, a leftmost position of the bounding box, a width of the bounding box, and a height of the bounding box.

In an embodiment, in a case where the external region information source includes alpha channel information, the region description information includes at least one of an alpha channel bit depth, an alpha channel transparent value, an alpha channel opaque value, an alpha channel increment flag, an alpha channel clip flag, an alpha channel clip type flag, or auxiliary picture sample information corresponding to an alpha channel information SEI message.

In an embodiment, in a case where the external region information source includes the omnidirectional viewport, the region description information includes at least one of a viewport azimuth center, a viewport elevation center, a tilt center, a viewport horizontal range, or a viewport vertical range.

In an embodiment, in a case where the external region information source includes a subpicture or a sub-tile, the region description information includes at least one of a subpicture size, a subpicture position, a sub-tile size, or a sub-tile position.

In an embodiment, the film grain region adaptive indication information includes at least film grain region adaptive SEI message enabling information, external definition region indication information, internal definition region indication information, an externally defined region quantity, an external definition region information source, a region index present flag, an externally defined region index, an internally defined region quantity, a topmost position of an internally defined region, a leftmost position of an internally defined region, a width of an internally defined region, a height of an internally defined region, film grain region adaptive SEI message persistence indication information, region type indication information, film grain function enabling information, a film grain region quantity, and a film grain parameter.

The device for film grain region processing set forth in this embodiment is configured to perform the method for film grain region processing applied to the decoder side according to FIG. 2. Because the underlying principles and technical effects of the device are concurrent with those of the method, repetitive descriptions thereof are omitted for conciseness.

FIG. 8 depicts a schematic diagram showing a device for film grain region processing according to an embodiment of the present application. This embodiment is applied to an encoder side. As illustrated in FIG. 8, the device for film grain region processing in this embodiment includes: a first generating module 810, a second generating module 820, and a sending module 830.

The first generating module 810 is configured to perform film grain region adaptive modeling on a source picture to generate corresponding film grain parameter indication information and corresponding region indication information.

The second generating module 820 is configured to generate corresponding film grain region adaptive indication information according to the film grain parameter indication information and the region indication information.

The sending module 830 is configured to write the film grain region adaptive indication information into an encoded bitstream corresponding to a source picture, and the encoded bitstream into which the film grain region adaptive indication information is written, is sent to a decoder side.

In an embodiment, a picture parameter of the source picture at least includes one of: a film grain characteristic; a picture feature; or a picture texture.

Specifically, the film grain characteristic at least includes one of: an intensity of a film grain; or a scaling parameter of a film grain.

In an embodiment, the first generating module 810 includes:
- a modeling unit, configured to perform film grain region adaptive modeling on the source picture to obtain corresponding region description information, a corresponding region type, and a corresponding film grain parameter;
- a first generating unit, configured to generate corresponding region indication information based on the region description information and the region type; and
a second generating unit, configured to generate corresponding film grain parameter indication information based on the film grain parameter.

In an embodiment, the region type includes at least one of, an externally defined region; or an internally defined region.

In an embodiment, in a case where the region type is the externally defined region, the first generating unit includes:
- a first generating sub-unit, configured to generate a corresponding external region information source and corresponding external region indication information based on external region description information; and
a second generating sub-unit, configured to generate the corresponding region indication information based on the external region information source and the external region indication information.

In an embodiment, in a case where the region type is the internally defined region, the first generating unit is configured to directly generate the corresponding region indication information based on internal region description information.

In an embodiment, the region indication information at least includes one of: a region type; an external region information source; external region indication information; and external region description information.

In an embodiment, in a case where the external region information source includes an annotated region, the external region indication information at least includes one of: an externally defined region quantity; a region index present flag; or an externally defined region index.

In an embodiment, in a case where the external region information source includes an omnidirectional viewport, the external region indication information at least includes one of the following: a viewport identifier; a region quantity; or a region index.

In an embodiment, in a case where the external region information source includes a sub-picture or a sub-tile, the external region indication information at least includes one of: a sub-picture index; a sub-picture identifier; a tile index; or a tile identifier.

In an embodiment, in a case where the external region information source includes an annotated region, the region description information includes at least a topmost position of a bounding box, a leftmost position of the bounding box, a width of the bounding box, and a height of the bounding box.

In an embodiment, in a case where the external region information source includes alpha channel information, the region description information includes at least one of an alpha channel bit depth, an alpha channel transparent value, an alpha channel opaque value, an alpha channel increment flag, an alpha channel clip flag, an alpha channel clip type flag, or auxiliary picture sample information corresponding to an alpha channel information SEI message.

In an embodiment, in a case where the external region information source includes the omnidirectional viewport, the region description information includes at least one of a viewport azimuth center, a viewport elevation center, a tilt center, a viewport horizontal range, or a viewport vertical range.

In an embodiment, in a case where the external region information source includes a subpicture or a sub-tile, the region description information includes at least one of a subpicture size, a subpicture position, a sub-tile size, or a sub-tile position.

In an embodiment, the film grain region adaptive indication information includes at least film grain region adaptive SEI message enabling information, external definition region indication information, internal definition region indication information, an externally defined region quantity, an external definition region information source, a region index present flag, an externally defined region index, an internally defined region quantity, a topmost position of an internally defined region, a leftmost position of an internally defined region, a width of an internally defined region, a height of an internally defined region, film grain region adaptive SEI message persistence indication information, region type indication information, film grain function enabling information, a film grain region quantity, and a film grain parameter.

The device for film grain region processing set forth in this embodiment is configured to perform the method for film grain region processing applied to the encoder side according to FIG. 3. Because the underlying principles and technical effects of the device are concurrent with those of the method, repetitive descriptions thereof are omitted for conciseness.

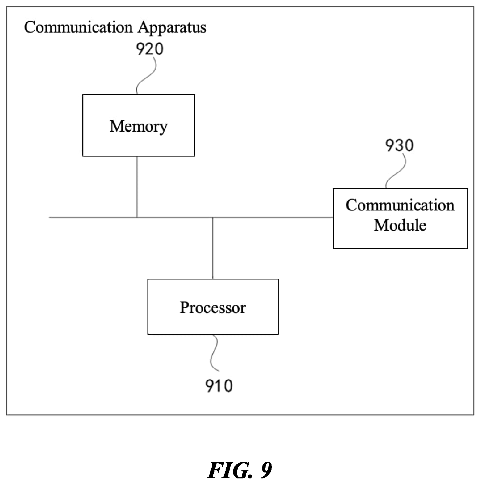

FIG. 9 depicts a schematic diagram showing a communication apparatus according to an embodiment of the present application. As shown in FIG. 9, the apparatus includes a processor 910, a memory 920, and a communication module 930. One or more processors 910 may be provided within the apparatus, while FIG. 9 shows one processor by way of example. One or more memory 920 may be provided within the apparatus, while FIG. 9 shows one memory by way of example. Processor 910, memory 920 and communication device 930 can be connected by a bus or other means. The connection is shown as bus by way of an example in FIG. 9.

The memory 920, functioning as a computer-readable storage medium, may be configured to store software programs, computer-executable programs, and modules, such as program instructions or modules for implementing the apparatus provided in any embodiment of the present disclosure (for example, the first determining module 710, the second determining module 720, the synthesizing module 730, and the adding module 740 in the device for film grain region processing). The memory 920 may generally include a program storage section and a data storage section, in which the program storage section may store an operating system and application programs for performing at least one operation, and data storage section may store data created according to the operation of the apparatus, or the like. In addition, the memory 920 can include a high-speed random-access memory and a nonvolatile memory, such as at least one disk memory device, a flash memory device, or other nonvolatile solid-state memory devices. In some implementations, the memory 920 may include memories remotely located relative to the processor 910, and these remote memories may be connected to the apparatus through a network. Examples of the above networks include, but are not limited to, the Internet, intranet, local area network, mobile communication network, and combinations thereof.

In a case where the communication apparatus serves as the decoder side, the apparatus provided in the present application may be configured to perform the method for film grain region processing at the decoder side according to any embodiment described above, and achieves corresponding operations and technical effects.

In a case where the communication apparatus serves as the decoder side, the apparatus provided in the present application may be configured to perform the method for film grain region processing at the encoder side according to any embodiment described above, and achieves corresponding operations and technical effects.

According to an embodiment of the present application, a storage medium is provided. The medium stores at least one computer program which, when executed by a processor, causes the processor to carry out a method for film grain region processing applied to a decoder. The method includes: -determining film grain parameter indication information and region indication information according to received film grain region adaptive indication information corresponding to a decoded picture; -determining a film grain region in the decoded picture according to the region indication information; -synthesizing a film grain corresponding to the decoded picture according to a film grain parameter determined by the film grain parameter indication information; and -blending the film grain into the film grain region in the decoded picture.

According to an embodiment of the present application, a storage medium is provided. The medium stores at least one computer program which, when executed by a processor, causes the processor to carry out a method for film grain region processing applied to an encoder. The method includes: -performing film grain region adaptive modeling on a source picture, to generate corresponding film grain parameter indication information and corresponding region indication information; -generating corresponding film grain region adaptive indication information according to the film grain parameter indication information and the region indication information; and -writing the film grain region adaptive indication information into an encoded bitstream corresponding to a source picture, and sending the encoded bitstream into which the film grain region adaptive indication information is written, to a decoder side.

It should be understood by those having ordinary skills in the art that the term user equipment covers any suitable type of wireless user equipment, such as a mobile phone, a portable data processing device, a portable web browser, or a vehicle-mounted mobile station.

Generally, various embodiments of the present disclosure may be implemented as hardware or dedicated circuits, software, logic or any suitable combination thereof. For example, some aspects may be implemented as hardware, while other aspects may be implemented as firmware or software executable by a controller, microprocessor or other computing device, although the present disclosure is not limited thereto.

Some embodiments of the present disclosure can be implemented by a data processor of a mobile device executing computer program instructions, for example, in a processor entity, or by hardware, or by a combination of software and hardware. Computer program instructions can be assembly instructions, instruction set architecture (ISA) instructions, machine instructions, machine-related instructions, microcode, firmware instructions, state setting data, or source code or object code written in any combination of one or more programming languages.

The block diagram of any logic flow in the drawings of the present disclosure may represent program process, or may represent interconnected logic circuits, modules and functions, or may represent the combination of program process and logic circuits, modules and functions. Computer programs can be stored in the memory. The memory can be of any type suitable for the local technical environment and can be realized with any suitable data storage technology, such as, but not limited to, read-only memory (ROM), random access memory (RAM), optical memory devices and systems like Digital Video Disc(DVD), or Compact Disk (CD) etc. Computer-readable media may include non-transitory storage media. The data processor may be of any type suitable for a local technical environment, and may include, but is not limited to, a general-purpose computer, a special-purpose computer, a microprocessor, a Digital Signal Processor (DSP), an Application Specific Integrated Circuit (ASIC), a Field-Programmable Gate Array (FPGA), and a processor based on a multi-core architecture.

Some embodiments of the present disclosure are described above, However, the present disclosure is not limited by those embodiments described. Various modifications and alternations can be made by those having ordinary skill in the art. Any modifications, equivalents, alternations, or improvements, made within the concepts of the present disclosure shall be included in the scope of protection of the present disclosure.

## Claims

1. A method for film grain region processing, applied to a decoder side, the method comprising:
determining film grain parameter indication information and region indication information, according to received film grain region adaptive indication information corresponding to a decoded picture;
determining a film grain region in the decoded picture according to the region indication information;
synthesizing a film grain corresponding to the decoded picture according to a film grain parameter determined by the film grain parameter indication information; and
blending the film grain into the film grain region in the decoded picture.

2. The method as claimed in claim 1, wherein determining the film grain region in the decoded picture according to the region indication information, comprises:
determining a region type according to the region indication information;
acquiring corresponding region description information from the region indication information based on the region type; and
determining the film grain region in the decoded picture according to the region description information.

3. The method as claimed in claim 2, wherein the region type comprises at least one of, an externally defined region; or an internally defined region.

4. The method as claimed in claim 2, wherein the region type is **characterized by** at least one of: at least one Boolean parameter; or an enumeration parameter.

5. The method as claimed in claim 2, wherein in response to determining that the region type is an externally defined region, acquiring the corresponding region description information from the region indication information based on the region type comprises:
acquiring an external region information source and external region indication information from the region indication information; and
acquiring corresponding external region description information according to the external region information source and the external region indication information.

6. The method as claimed in claim 2, wherein in response to determining that the region type is an internally defined region, acquiring the region description information from the region indication information based on the region type comprises:
directly acquiring internal region description information from the region indication information.

7. The method as claimed in claim 1, wherein determining the film grain region in the decoded picture according to the region indication information, comprises:
acquiring corresponding region description information according to the region indication information; and
determining the film grain region in the decoded picture according to the region description information.

8. The method as claimed in claim 2 or 7, wherein determining the film grain region in the decoded picture according to the region description information, comprises one of,
determining, by default, that a region corresponding to the region description information in the decoded picture is a film grain enabled region;
determining, by default, that a region corresponding to the region description information in the decoded picture is a film grain disabled region; or
determining whether a film grain function is enabled in a region of the decoded picture corresponding to the region description information, by a pre-configured film grain flag.

9. The method as claimed in claim 1, wherein the region indication information at least comprises one of: a region type; an external region information source; external region indication information; or external region description information.

10. The method as claimed in claim 9, wherein in response to determining that the external region information source comprises an annotated region, the external region indication information at least comprises one of: an externally defined region quantity; a region index present flag; or an externally defined region index.

11. The method as claimed in claim 9, wherein in response to determining that the external region information source comprises an omnidirectional viewport, the external region indication information at least comprises one of: a viewport identifier; a region quantity; or a region index.

12. The method as claimed in claim 9, wherein in response to determining that the external region information source comprises a sub-picture or a sub-tile, the external region indication information at least comprises one of: a sub-picture index; a sub-picture identifier; a tile index; or a tile identifier.

13. The method as claimed in claim 9, wherein in response to determining that the external region information source comprises an annotated region, the region description information comprises at least a topmost position of a bounding box, a leftmost position of the bounding box, a width of the bounding box, and a height of the bounding box.

14. The method as claimed in claim 9, wherein in response to determining that the external region information source comprises alpha channel information, the region description information comprises at least one of an alpha channel bit depth, an alpha channel transparent value, an alpha channel opaque value, an alpha channel increment flag, an alpha channel clip flag, an alpha channel clip type flag, or auxiliary picture sample information corresponding to an alpha channel information Supplemental Enhancement Information (SEI) message.

15. The method as claimed in claim 9, wherein in response to determining that the external region information source comprises an omnidirectional viewport, the region description information comprises at least one of a viewport azimuth center, a viewport elevation center, a tilt center, a viewport horizontal range, or a viewport vertical range.

16. The method as claimed in claim 9, wherein in response to determining that the external region information source comprises a subpicture or a sub-tile, the region description information comprises at least one of a subpicture size, a subpicture position, a sub-tile size, or a sub-tile position.

17. The method as claimed in claim 9, wherein the film grain region adaptive indication information comprises at least one of:
film grain region adaptive SEI message enabling information,
external definition region indication information,
internal definition region indication information,
an externally defined region quantity,
an external definition region information source,
a region index present flag,
an externally defined region index,
an internally defined region quantity,
a topmost position of an internally defined region,
a leftmost position of an internally defined region,
a width of an internally defined region,
a height of an internally defined region,
film grain region adaptive SEI message persistence indication information,
region type indication information,
film grain function enabling information,
a film grain region quantity, and
a film grain parameter.

18. A method for film grain region processing, applied to an encoder side, the method comprising:
performing film grain region adaptive modeling on a source picture, to generate corresponding film grain parameter indication information and corresponding region indication information;
generating corresponding film grain region adaptive indication information according to the film grain parameter indication information and the region indication information; and
writing the film grain region adaptive indication information into an encoded bitstream corresponding to the source picture, and sending the encoded bitstream into which the film grain region adaptive indication information is written, to a decoder side.

19. The method as claimed in claim 18, wherein the source picture includes at least one parameter of: a film grain characteristic, a picture feature, and a picture texture;
wherein the film grain characteristic at least includes one of: an intensity of a film grain, and a scaling parameter of a film grain.

20. The method as claimed in claim 18, wherein performing the film grain region adaptive modeling on the source picture to generate the corresponding film grain parameter indication information and the corresponding region indication information comprises:
performing film grain region adaptive modeling on the source picture to obtain corresponding region description information, a corresponding region type, and a film grain parameter;
generating corresponding region indication information based on the region description information and the region type; and
generating corresponding film grain parameter indication information based on the film grain parameter.

21. The method as claimed in claim 20, wherein the region type comprises at least one of, an externally defined region, or an internally defined region.

22. The method as claimed in claim 20, wherein in response to determining that the region type is the externally defined region, generating the corresponding region indication information based on the region description information and the region type comprises:
generating a corresponding external region information source and corresponding external region indication information based on external region description information; and
generating the corresponding region indication information based on the external region information source and the external region indication information.

23. The method as claimed in claim 20, wherein in response to determining that the region type is the internally defined region, generating the corresponding region indication information based on the region description information and the region type comprises:
directly generating the corresponding region indication information based on internal region description information.

24. The method as claimed in claim 20, wherein the region indication information at least comprises one of: a region type; an external region information source; external region indication information; or external region description information.

25. A communication apparatus, comprising a memory, and at least one processor;
the memory is configured to store at least one program which,
when executed by the at least one processor, causes the at least one processor to carry out the method as claimed in any one of claims 1-17, or the method as claimed in any one of claims 18-24.

26. A storage medium storing at least one computer program which, when executed by a processor, causes the processor to carry out the method as claimed in any one of claims 1-17, or the method as claimed in any one of claims 18-24.
